(19) Europäisches Patentamt
European Patent Office
Office européen des brevets

(11) EP 2 752 692 B1

(12) # EUROPEAN PATENT SPECIFICATION

(45) Date of publication and mention of the grant of the patent:
**18.10.2017 Bulletin 2017/42**

(21) Application number: **12829918.7**

(22) Date of filing: **05.09.2012**

(51) Int Cl.:
***G02B 5/30*** (2006.01) ***B32B 27/30*** (2006.01)
***C09B 31/072*** (2006.01) ***G02F 1/1335*** (2006.01)

(86) International application number:
**PCT/JP2012/072642**

(87) International publication number:
**WO 2013/035752 (14.03.2013 Gazette 2013/11)**

(54) **POLARIZER AND POLARIZING PLATE**
POLARISIERER UND POLARISIERUNGSPLATTE
POLARISEUR ET PLAQUE DE POLARISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.09.2011 JP 2011197600**

(43) Date of publication of application:
**09.07.2014 Bulletin 2014/28**

(73) Proprietors:
- **Nippon Kayaku Kabushiki Kaisha**
**Tokyo 102-8172 (JP)**
- **Polatechno Co., Ltd.**
**Joetsu-shi, Niigata 944-0101 (JP)**

(72) Inventor: **MOCHIZUKI Noriaki**
**Tokyo 115-8588 (JP)**

(74) Representative: **Gille Hrabal**
**Brucknerstrasse 20**
**40593 Düsseldorf (DE)**

(56) References cited:
**EP-A1- 2 206 748** **WO-A1-01/06281**
**WO-A1-2010/071094** **WO-A1-2010/071094**
**WO-A1-2010/095447** **WO-A1-2010/095447**
**JP-A- H05 232 316** **JP-A- H11 218 610**
**JP-B2- H0 564 765**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 752 692 B1

## Description

### TECHNICAL FIELD

The present invention relates to a dye-based polarizing element and a polarizing plate.

### BACKGROUND ART

A polarizing element is typically manufactured by adsorbing and orienting iodine or a dichromatic dye which is a dichromatic pigment on a polyvinyl alcohol resin film. A protective film of triacetyl cellulose or the like is bonded to at least one side of the polarizing element via an adhesive to form a polarizing plate, which is used in an LCD device or the like. A polarizing plate using iodine as a dichromatic pigment is referred to as an iodine-based polarizing plate, and a polarizing plate using a dichromatic dye as a dichromatic pigment is referred to as a dye-based polarizing plate. Of these, dye-based polarizing plates are characterized in having high heat resistance, high humidity durability, and high stability, as well as high color selectivity according to the formulation thereof, but are problematic in that they exhibit lower levels of transmission, i.e., lower contrast, compared to iodine-based polarizing plates having the same level of polarization. Thus, there is a demand for a polarizing plate that maintains high durability, exhibits diverse color selectivity, and has high transmission and high polarization properties.

Patent Reference 1: Japanese Patent Laying-open 2005-171231
Patent Reference 2: Japanese Patent Laying-open 2007-238888
Patent Reference 3: Japanese Patent Laying-open 2008-120868
Patent Reference 4: Japanese Patent Laying-open 2009-014873
Patent Reference 5: Japanese Patent Laying-open H01-105204
Patent Reference 6: Japanese Patent Laying-open H03-175404

### SUMMARY OF THE INVENTION

### PROBLEMS TO BE SOLVED BY THE INVENTION

In connection with improving the optical properties of dye-based polarizing plates, techniques of improving optical properties via the structure of the dichromatic pigment have been disclosed in, for example, Patent References 1-3. Patent Reference 4 discloses a technique of improving optical properties via polarizing element machining conditions, and Patent References 5 and 6 disclose techniques of improving optical properties by using a highly polymerized polyvinyl alcohol film or improving substituents of film. However, the techniques disclosed in the abovementioned references are difficult to industrialize, and there remains a high demand for a polarizing plate having even higher transmission and high contract, as well as for further improvement in optical properties. The industrial manufacture of polarizing films from highly polymerized polyvinyl alcohol resins requires the optimization of the physical properties of the polyvinyl alcohol resin film, the polarizing film manufacturing conditions, and the dichromatic pigment used in the polarizing element.

As the result of dedicated research into solving the problems described above, the inventors discovered that a polarizing element comprising an azo compound-based dichromatic pigment and a polyvinyl alcohol resin having a specific degree of polymerization improves optical properties, and improves durability against light, heat, and humidity.

Specifically, the present invention relates to:

(1) a polarizing element characterized in comprising a polyvinyl alcohol resin film adsorbing at least one dichromatic pigment selected from a compound represented by formula (I), a salt thereof, or a transition metal complex, and performing drawing, the polyvinyl alcohol resin film having a degree of polymerization of 5,000 to 10,000:

[Formula 1]

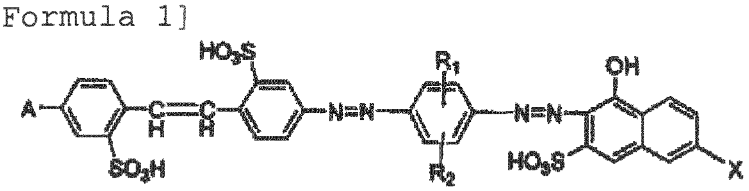

(whrein A represens a nitro group; $R_1$ and $R_2$ each independently representing a hydrogen atom, a hydroxyl group,

a lower alkyl group, a lower alkoxy group, a sulfo group, or a lower alkoxy group having a sulfo group; and *X* represents a benzoylamino group optionally having a substituent, a phenylamino group optionally having a substituent, or a naphthotriazole group optionally having a substituent, the substituent being a lower alkyl group, a lower alkoxy group, a sulfo group, an amino group, or a substituted amino group);

(2) the polarizing element according to (1), characterized in that the dichromatic pigment is selected from a compound represented by formula (II), a salt thereof, or a transition metal complex thereof:

[Formula 2]

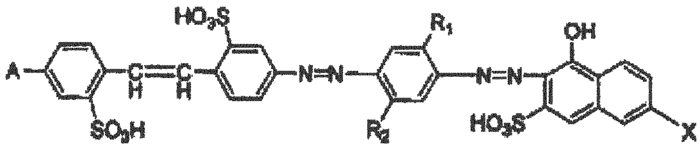

(wherein A represents a nitro group or an amino group; $R_1$ and $R_2$ each independently represents a hydrogen atom, a hydroxyl group, a lower alkyl group, a lower alkoxy group, a sulfo group, or a lower alkoxy group having a sulfo group; and *X* represents a benzoylamino group optionally having a substituent, a phenylamino group optionally having a substituent, a phenylazo group optionally having a substituent, or a naphthotriazole group optionally having a substituent, the substituent being a lower alkyl group, a lower alkoxy group, a sulfo group, an amino group, or a substituted amino group);

(3) the polarizing element according to (1) or (3), wherein the transition metal complex is a copper complex;

(4) the polarizing element according to any one of (1) to (3), which is obtained using a feedstock film having a swelling level of 200 to 240%;

(5) a polarizing plate, characterized in that a transparent protective layer is provided on at least one side of the polarizing element according to any one of (1) to (4);

(6) an LCD device comprising the polarizing element according to any of (1) to (4) or the polarizing plate according to (5); and

(7) a liquid crystal projector comprising the polarizing element according to any one of (1) to (4) or the polarizing plate according to (5).

ADVANTAGES OF THE INVENTION

The polarizing element or polarizing plate of the present invention provides an imporoved optical properties, and improved durability to light, heat, and humidity.

BEST MODE FOR CARRYING OUT THE INVENTION

The polarizing element according to the present invention is characterized in comprising a polyvinyl alcohol resin film formed by adsorbing at least one dichromatic pigment selected from a compound represented by formula (I), a salt thereof, or a transition metal complex, and performing stretching, wherein the polyvinyl alcohol resin film has a degree of polymerization of 5,000 to 10,000:

[Formula (I)]

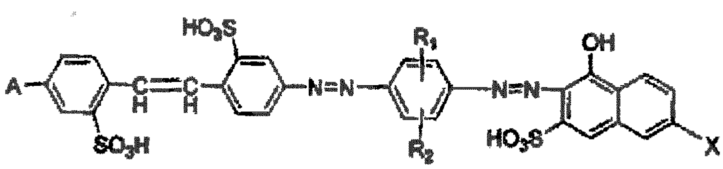

(*A* represents a nitro group; $R_1$ and $R_2$ each independently represents a hydrogen atom, a hydroxyl group, a lower alkyl group, a lower alkoxy group, a sulfo group, or a lower alkoxy group having a sulfo group; and *X* represents an benzoylamino group optionally having a substituent, an phenylamino group optionally having a substituent, or an naphthotriazole group optionally having a substituent, the substituent being a lower alkyl group, a lower alkoxy group, a sulfo group, an amino

group, or a substituted amino group);

If the present invention comprises a dichromatic dye, a film that is a polyvinyl alcohol resin is most preferable out of considerations of dye affinity and cross-linkability. An exemplary method of manufacturing the polarizing element according to the present invention will be described hereafter.

There is no particular restriction upon the method to produce the polyvinyl alcohol resin constitutes the polarizing element according to the present invention; a known method can be used to produce the resin. For example, the polyvinyl alcohol resin used in the present invention can be produced by saponifying a polyvinyl ester polymer obtained by polymerizing a vinyl ester. Examples of vinyl esters include vinyl acetate, vinyl formate, vinyl propionate, vinyl butyrate, vinyl pivalate, vinyl versate, vinyl laurate, vinyl stearate, and vinyl benzoate, one or more of which can be selected. Of these, vinyl acetate is preferable. There is no particular restriction upon the polymerization temperature, but, if methanol is used as a polymerization solvent, a temperature around 60°C is preferable, as the boiling point of methanol is near 60°C. The polyvinyl alcohol resin is not limited to a saponified homopolymer of a vinyl ester as long as the effects of the present invention are not negatively affected. Acceptable examples include: a modified polyvinyl ester in which an unsaturated carboxylic acid or a derivative thereof, an unsaturated sulfonic acid or a derivative thereof, a $C_{2-30}$ alpha-olefin, or the like is graft-copolymerized with a polyvinyl alcohol resin at a proportion of less than 5 mol%; a saponified modified polyvinyl ester in which an unsaturated carboxylic acid or a derivative thereof, an unsaturated sulfonic acid or a derivative thereof, a $C_{2-30}$ alpha-olefin or the like is copolymerized at a proportion of less than 15 mol%; and a polyvinyl acetal polymer in which the hydroxyl groups of a polyvinyl alcohol are partially crosslinked using an aldehyde such as formaldehyde, butylaldehyde, or benzaldehyde.

The degree of saponification of the polyvinyl alcohol resin is preferably at least 99 mol%, more preferably at least 99.5 mol%. A degree of saponification of less than 99 mol% is not preferable, as the polyvinyl alcohol will readily elute, leading to the risks of in-plane irregularities in optical properties, reductions in dye affinity during dyeing steps, breakage during stretching steps, and dramatic reductions in productivity.

In order to improve the optical properties of the present invention, the polyvinyl alcohol resin must have a degree of polymerization of 5,000 to 10,000, preferably at least 5,500. If the degree of polymerization of the polyvinyl alcohol resin is less than 5,000, there will be difficulties in obtaining high polarization performance. If the degree of polymerization exceeds 10,000, the resin will become harder, reducing film formation ability, drawability, and productivity; thus, a degree of polymerization of no more than 10,000 is preferable from an industrial point of view.

The "degree of polymerization of the polyvinyl alcohol resin" refers to the viscosity-average degree of polymerization, and can be calculated according to a method that is well known in the art. For example, the viscosity-average degree of polymerization can be calculated according to the following method. 0.28 g polyvinyl alcohol resin was dissolved in 70 g distilled water at 95°C to prepare a 0.4% aqueous polyvinyl alcohol solution, which was cooled to 30°C. The solution was cooled in a 30°C constant-temperature water bath to create a polymerization measurement sample. 10 mL of the polymerization measurement sample was dried for 20 hours in an evaporating dish within a dryer at 105°C, and the post-drying weight [$\alpha$ (g)] of the polymerization measurement sample was measured. The concentration C (g/L) of the polymerization measurement sample was calculated according to formula (i).

$$C = 1000 \times \alpha/10 \quad \text{Formula (i)}$$

The polymerization measurement sample or distilled water was introduced into an Ostwald viscometer using a 10 mL hole pipette, and stabilized for 15 minutes in a 30°C constant-temperature water bath. The settling time t1 (sec) of the introduced polymerization measurement sample and the settling time t0 (sec) of the distilled water were measured, and the viscosity-average degree of polymerization E was calculated using formulas (ii) to (iv).

$$\eta t = t_1/t_0 \quad \text{Formula (ii)}$$

$$\eta = 2.303 \times \mathrm{Log}(\eta t/c) \quad \text{Formula (iii)}$$

$$\mathrm{Log}(E) = 1.613 \times \mathrm{Log}([\eta] \times 104/8.29) \quad \text{Formula (iv)}$$

The polyvinyl alcohol resin obtained as described above can be formed into a film to obtain a film feedstock. Non-limiting examples of film formation methods include melt-extruding a hydrous polyvinyl alcohol resin, along with film casting, wet film formation (expulsion into a poor solvent), gel film formation (chill-gelling an aqueous polyvinyl

alcohol resin solution, following by extracting and removing the solvent), film casting (pouring an aqueous polyvinyl alcohol resin solution onto a base, followed by drying), and combinations of these methods.

Non-limiting examples of the solvent used in forming the film include one or more of dimethyl sulfoxide, dimethyl formamide, dimethyl acetamide, N-methyl pyrrolidone, ethylene glycol, glycerol, propylene glycol, diethylene glycol, triethylene glycol, tetraethylene glycol, trimethylol propane, ethylenediamine, diethylenetriamine, and water. The amount of solvent used to form the film is preferably from 70 to 95 mass% of the total film formation stock solution, but is not restricted thereto. However, if the amount of solvent is less than 50 mass%, the viscosity of the film formation stock solution will increase, impeding filtration and degassing during preparation, and making it difficult to obtain a film feedstock free of foreign matter or defects. If the amount of solvent is greater than 95 mass%, the viscosity of the film formation stock solution will be too low, inhibiting the desired thickness control, increasing the effects of wind surface ripples during drying and drying time, and reducing productivity.

A plasticizer is optionally used to manufacture the film feedstock. Non-limiting examples of plasticizers include glycerin, diglycerin, ethylene glycol, propylene glycol, and low-molecular-weight polyethylene glycol. There is no particular restriction upon the amount of plasticizer used; normally, an amount in a range of 5-15 parts by mass per 100 parts by mass polyvinyl alcohol resin is suitable.

Non-limiting examples of methods of drying the film feedstock following film formation include hot-air drying, contact drying using a heated roller, and infrared heater drying. One of these methods may be used in isolation, or a combination of two or more may be used. Similarly, there is no particular restriction upon the drying temperature, but a temperature in a range of 50-70°C is preferable.

Thermal treatment is preferably performed in order to keep the swelling of the dried film feedstock within a predetermined range to be described hereafter. Examples of the method of thermally treating the film feedstock following film formation include hot air, contact with a heated roller, and the like; there is no particular restriction as long as thermal treatment is possible. One of these methods may be used in isolation, or a combination of two or more may be used. There is no particular restriction upon the thermal treatment temperature and time; a range of 110-140°C is preferable, and treatment is preferably performed for 1-10 minutes, but the invention is not particularly restricted to such conditions.

The thickness of the resulting film feedstock is preferably 20-100 μm, more preferably 20-80 μm, and still more preferably 20-60 μm. If the thickness is less than 20 μm, the film will be prone to tearing. If the thickness exceeds 100 μm, the stress upon the film during stretching will increase, the mechanical load during stretching steps will increase, and large-scale machinery will be necessary to withstand the load.

The feedstock film obtained as described above is next subjected to a swelling step.

The swelling step is performed by immersing the polyvinyl alcohol resin film in a 20-50°C solution for from 30 seconds to 10 minutes. The solution is preferably water. In order to reduce the time necessary to manufacture the polarizing element, the swelling step can be omitted, as swelling will also occur during pigment dyeing.

The swelling level F of the film feedstock is preferably 200-240%, more preferably 205-235%, and still more preferably 210-230%. If the swelling level F is less than 200%, there will be little elongation during stretching and the possibility of tearing at low elongation rates will increase, impeding sufficient stretching. If the swelling level F exceeds 240%, swelling will be excessive, causing wrinkles and slack and leading to breakage during stretching. To control the swelling level F, the temperature and time of the thermal treatment performed upon the film feedstock following film formation can be adjusted, for example, to yield a suitable swelling level F.

A method well-known in the art can be used to measure the swelling level F of the film feedstock, an example of which is as follows. The film feedstock was cut to a size of 5 × 5 cm, and immersed for four hours in 1 L of 30°C distilled water. The immersed film was removed from the distilled water and sandwiched between two sheets of filter paper to absorb any water drops on the surface, after which the weight [$\beta$ (g)] of the film having been immersed in the water was measured. After having been immersed and the water drops on its surface absorbed, the film was dried for 20 hours in a dryer at 105°C and cooled for 30 minutes in a desiccator, after which the weight [$\gamma$ (g)] of the dried film was measured, and the swelling level F of the film feedstock was calculated according to formula (v).

$$\text{Swelling level } F = 100 \times \beta/\gamma \text{ (\%)} \quad \text{Formula (v)}$$

After the swelling step, a dyeing step is performed. In the present invention, the pigment represented by formula (I) can be adsorbed to the polyvinyl alcohol film in the dyeing step. There is no particular limitation upon the dyeing step as long as the method involves adsorbing the pigment onto the polyvinyl alcohol film; for example, the dyeing step can be performed by immersing the polyvinyl alcohol resin film in a solution containing a dichromatic dye. The temperature of the solution used in this step is preferably 5-60°C, more preferably 20-50°C, and especially preferably 35-50°C. The immersion time within the solution can be adjusted as appropriate, with from 30 seconds to 20 minutes being preferable, and 1-10 minutes being more preferable. The dyeing method preferably involves immersion in the solution, but it is also

possible to apply the solution to the polyvinyl alcohol resin film.

The dichromatic dye-containing solution can contain sodium carbonate, sodium bicarbonate, sodium chloride, sodium sulfate, anhydrous sodium sulfate, sodium tripolyphosphate, or the like as a dyeing aid. The respective contained amounts thereof can be adjusted as desired according to the dye affinity according to time and temperature, with amounts of 0-5 wt% being preferable, and 0.1-2 wt% being more preferable.

Apart from the azo compound which is a dichromatic pigment represented by formula (I), the pigment used in the dyeing step may also be a salt or transition metal complex of the compound, the transition metal complex preferably being a copper complex. The salt of the compound shown in formula (I) is preferably a sodium salt, but a salt such as a lithium salt, a potassium salt, an ammonium salt, an alkylamine salt, or the like is also acceptable.

In formula (I), A represents a nitro group.

In formula (I), *X* represents an benzoylamino group optionally having a substituent, an phenylamino group optionally having a substituent, or an naphthotriazole group optionally having a substituent. If *X* is a benzoylamino group optionally having a substituent, a phenylamino group optionally having a substituent, or a phenylazo group optionally having a substituent, the substituent is preferably a hydrogen atom, a lower alkyl group, a lower alkoxy group, a sulfo group, an amino group, or a substituted amino group. If the substituent is a naphthotriazole group optionally having a substituent, the substituent is preferably a sulfo group. If *X* is an phenylamino group optionally having a substituent, the substituent thereof is preferably a hydrogen atom, methyl group, a methoxy group, an amino group, a substituted amino group, or a sulfo group, with there being no particular limitation upon the substitution site, although it is preferably a p site. If *X* is a substituent-comprising benzoylamino group, the substituent is preferably a hydrogen atom, an amino group, or a substituted amino group, especially preferably a hydrogen atom or an amino group. There is no particular limitation upon the substitution site, although it is preferably a p site.

In order to further improve optical properties, the pigment represented by formula (I) preferably has a structure such as that shown in formula (II). As in Formula (I), $R_1$ and $R_2$ independently represent a hydrogen atom, lower alkyl group, lower alkoxy group, sulfo group, or sulfo group-comprising lower alkoxy group; preferably a hydrogen atom, methyl group, ethyl group, methoxy group, ethoxy group, or sulfo group. If a lower alkoxy group having a sulfo group, the group is a straight chain alkoxy, the substitution site of the sulfo group being the alkoxy group terminal, with a 3-sulfopropoxy group or a 4-sulfobutoxy group being more preferable. A hydrogen atom, methyl group, methoxy group, or 3-sulfopropoxy group is especially preferable. Preferable substitution sites include a 2- site only, a 5- site only, or a combination of a 2- site and a 5- site. $R_1$ is especially preferably a methoxy group.

Formula (II)

[Formula 4]

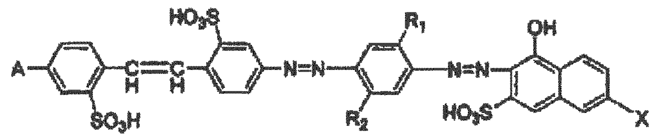

A polarizing element using a polyvinyl alcohol resin film having a degree of polymerization of 5,000 to 10,000 obtained using pigments represented by formulas (I) and (II) above will exhibit greatly improved optical properties. In the case of lower alkyl groups, lower alkoxy groups, and sulfo group-comprising lower alkoxy groups, "lower" refers to a $C_{1-5}$ alkyl group or alkoxy group.

Next, specific examples of azo compound represented by formula (I) used in the present invention will be given. In the formulas, sulfo groups are shown in the form of free acids.

[Example Compound 1]

[Formula 5]

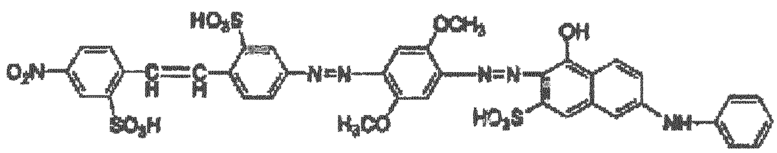

[Example Compound 2]

[Formula 6]

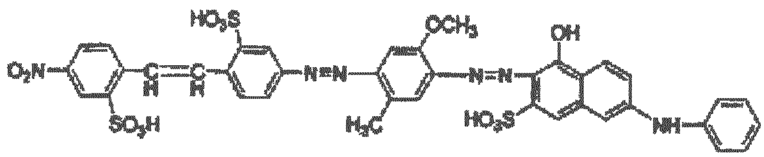

[Example Compound 3]

[Formula 7]

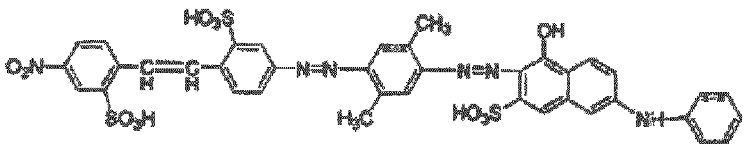

[Example Compound 4]

[Formula 8]

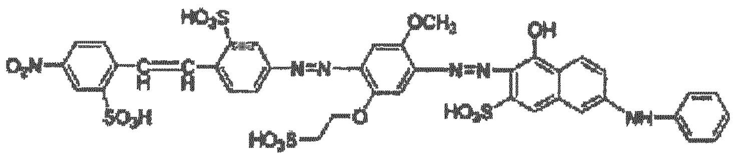

[Example Compound 5]

[Formula 9]

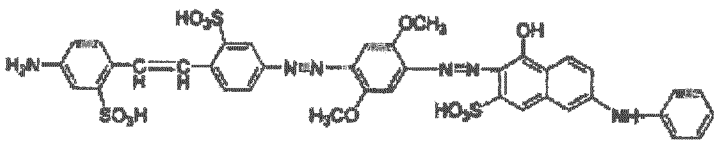

[Example Compound 6]

[Formula 10]

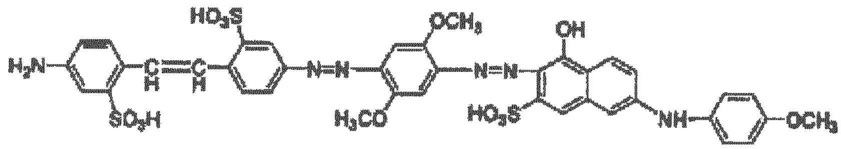

[Example Compound 7]

[Formula 11]

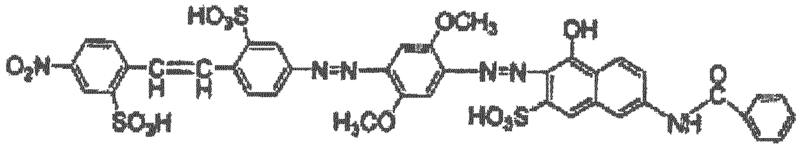

[Example Compound 8]

[Formula 12]

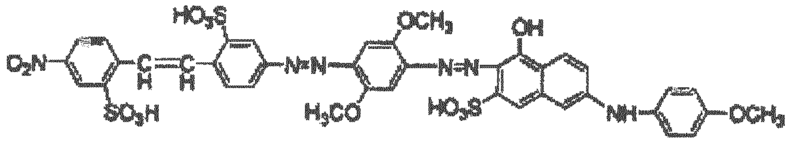

[Example Compound 9]

[Formula 13]

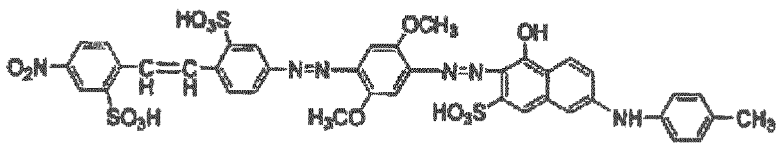

[Example Compound 10]

[Formula 14]

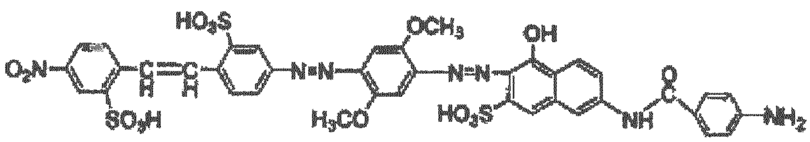

[Example Compound 11]

[Formula 15]

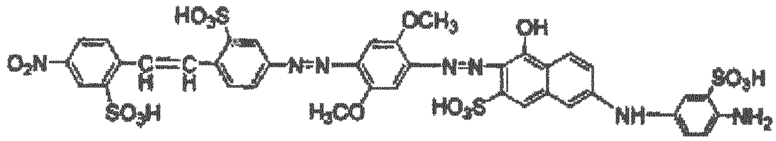

[Example Compound 12]

[Formula 16]

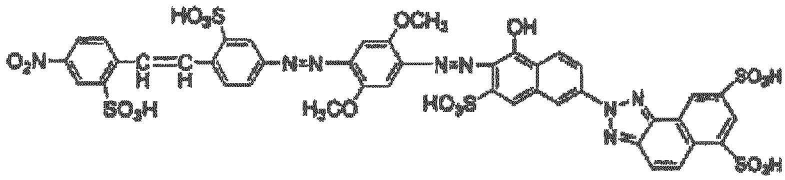

[Example Compound 13]

[Formula 17]

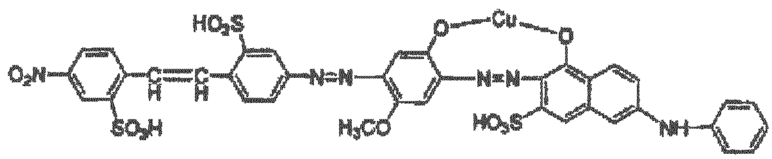

[Example Compound 14]

[Formula 18]

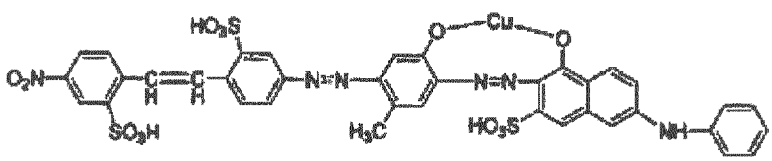

[Example Compound 15]

[Formula 19]

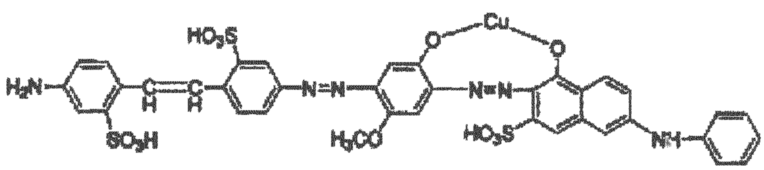

[Example Compound 16]

[Formula 20]

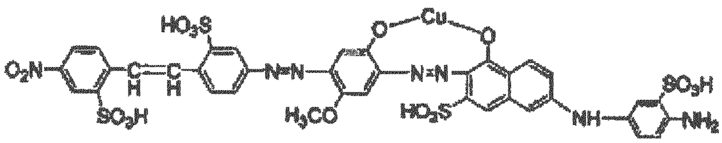

[Example Compound 17]

[Formula 21]

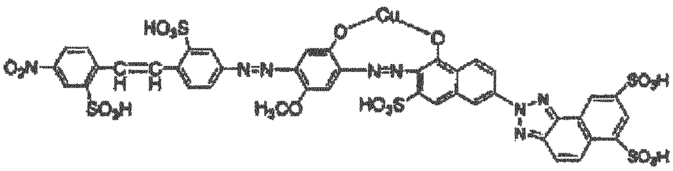

[Example Compound 18]

[Formula 22]

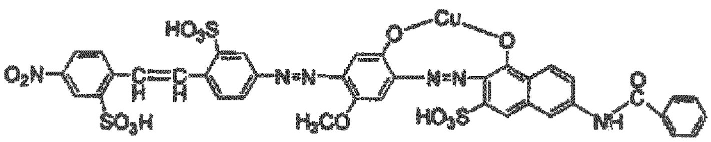

The azo compound used as a pigment in the present invention can typically be manufactured according to the following process using a synthesis method known in the relevant field of art. First, a stilbene structure-comprising compound represented by the following formula:

[Formula 23]

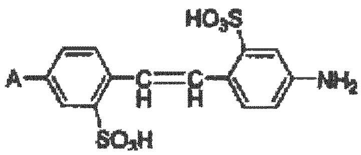

(A being as defined for formula (I) above) is coupled with a compound represented by:

[Formula 24]

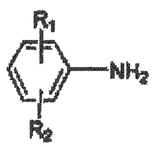

($R_1$ and $R_2$ being as defined for formula (I) above) to obtain a monoazo compound represented by:

[Formula 25]

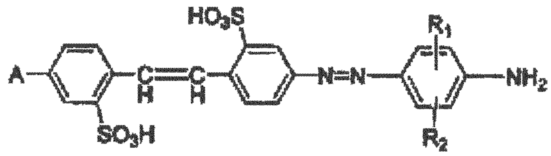

Next, after further diazotizing the monoazo compound, the compound is coupled with a compound represented by:

[Formula 26]

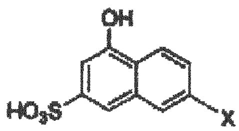

(*X* being as defined for formula (I) above) according to a known method to obtain the compound represented by formula (I). A transition metal complex of the compound represented by formula (I) can be obtained by further performing treatment using copper sulfate or the like as necessary.

The azo compounds represented by formulas (1) and (II) and salts thereof may be used in the dye-based polarizing element or dye-based polarizing plate according to the present invention singly or in combination, and one or more additional types of other organic dye may also be used as necessary. There is no particular restriction upon the additional organic dye, but it preferably dyes hydrophilic polymers and is a highly dichromatic dye having absorption properties in a wavelength region different from the absorption wavelength region of the azo compound or salt thereof according to the present invention. Representative non-limiting examples include C.I. Direct Yellow 12, C.I. Direct Yellow 28, C.I. Direct Yellow 44, C.I. Direct Orange 26, C.I. Direct Orange 39, C.I. Direct Orange 71, C.I. Direct Orange 107, C.I. Direct Red 2, C.I. Direct Red 31, C.I. Direct Red 79, C.I. Direct Red 81, C.I. Direct Red 247, C.I. Direct Green 80, and C.I. Direct Green 59, which may be selected according to purpose. These pigments may be used as free acids, or as alkali metal salts (such as sodium salts, potassium salts, or lithium salts), ammonium salts, or amine salts.

If another organic dye is additionally used as necessary, the dye type will differ according to whether the desired polarizing element is a neutral-colored polarizing element, a colored polarizing element for a liquid crystal projector, or another type of colored polarizing element. There is no particular limitation upon the proportion thereof in the formulation; typically, a total amount of one or more organic dye in a range of 0.1-10 parts by weight with respect to the weight of the azo compound represented by formula (I) or salt thereof is preferable.

After the dyeing step, a cleaning step (hereafter, "cleaning step 1") can be performed before proceeding to the next step. The cleaning step 1 is a step of cleaning off dye solvent adhering to the surface of the polyvinyl alcohol resin film from the dyeing step. Performing a cleaning step 1 allows migration of the dye into the solution being treated in the next step to be suppressed. Water is typically used in the cleaning step 1. The cleaning method preferably involves immersion in the solution, but it is also possible to apply the solution to the polyvinyl alcohol resin film. There is no particular limitation upon the cleaning time, but 1-300 seconds is preferable, and 1-60 seconds more preferable. The temperature of the solvent used in cleaning step 1 must be a temperature that will not dissolve a hydrophilic polymer. The cleaning treatment is generally performed at 5-40°C.

After the dyeing step or cleaning step 1, a step of adding a crosslinking agent and/or a water resistance agent can be performed. Examples of crosslinking agents include boron compounds such as boric acid, borax, or ammonium borate; polyhydric aldehydes such as glyoxal or glutaraldehyde; a biuret-type, isocyanurate-type, block-type, or other type of polyhydric isocyanate compound; and titanium compounds such as titanium oxysulfate. Also acceptable are ethylene glycol glycidyl ether, polyamide epichlorohydrin, and the like. Examples of water resistance agents include succinic acid peroxide, ammonium persulfate, calcium perchlorate, benzoin ethyl ether, ethylene glycol diglycidyl ether, glycerol diglycidyl ether, ammonium chloride, and magnesium chloride, with boric acid being preferable. A step of adding a crosslinking agent and/or a water resistance agent is performed using one or more of the abovementioned crosslinking agents and/or water resistance agents. Water is preferably used as the solvent, but the present invention is not limited to such. The concentration of the crosslinking agent and/or water resistance agent in the solvent in the step of adding a crosslinking agent and/or a water resistance agent is preferably 0.1-6.0 wt% of the solvent in the case of boric acid, for example, and more preferably 1.0-4.0 wt%. The temperature of the solvent used in this step is preferably 5-70°C, more preferably 5-50°C. The method used to incorporate the crosslinking agent and/or water resistance agent into the polyvinyl alcohol resin film is preferably immersion in the solution, but it is also acceptable to apply or paint the solution

onto the polyvinyl alcohol resin film. The treatment time for this process is preferably from 30 seconds to 6 minutes, more preferably 1-5 minutes. However, it is not essential to add a crosslinking agent and/or a water resistance agent, and this step may be omitted if time must be reduced or a cross-linking or water resistance treatment is unnecessary.

After performing the dyeing step, cleaning step 1, and step of adding a crosslinking agent and/or a water resistance agent, a stretching step is performed. The stretching step is a step of uniaxially stretching the polyvinyl alcohol film. The stretching method may be a wet stretching method or a dry stretching method, and the present invention can be attained by stretching to a stretch factor of at least 3. The stretch factor is preferably at least 3, more preferably 5-7.

If a dry stretching method is used and the stretching/heating medium is air, stretching is preferably performed at a temperature in a range from room temperature to 180°C. Treatment is preferably performed in an atmosphere having a relative humidity of 20-95% RH. Non-limiting examples of heating methods include inter-roller zone stretching, roller-heated stretching, rolling, and infrared-heated stretching. The stretching step can be performed in one stage, or in two or more multiple stages.

If a wet stretching method is used, stretching is performed in water, a water soluble organic solvent, or a mixed solvent thereof. Stretching is preferably performed while immersing the film in a solution containing a crosslinking agent and/or water resistance agent. Examples of crosslinking agents include boron compounds such as boric acid, borax, or ammonium borate; polyhydric aldehydes such as glyoxal or glutaraldehyde; a biuret-type, isocyanurate-type, block-type, or other type of polyhydric isocyanate compound; and titanium compounds such as titanium oxysulfate. Also acceptable are ethylene glycol glycidyl ether, polyamide epichlorohydrin, and the like. Examples of water resistance agents include succinic acid peroxide, ammonium persulfate, calcium perchlorate, benzoin ethyl ether, ethylene glycol diglycidyl ether, glycerol diglycidyl ether, ammonium chloride, and magnesium chloride. Stretching is performed in a solution containing one or more of the abovementioned crosslinking agents and/or water resistance agents. The crosslinking agent is preferably boric acid. The crosslinking agent and/or water resistance agent concentration in the stretching step is preferably, for example, 0.5-15 wt%, more preferably 2.0-8.0 wt%. A stretch factor of 2-8 is preferable, and 5-7 more preferable. The stretching temperature is preferably 40-60°C, and more preferably 45-58°C. The stretching time is ordinarily from 30 seconds to 20 minutes, more preferable 2-5 minutes. The wet stretching step can be performed in one stage, or in two or more multiple stages.

After the stretching step has been performed, crosslinking agent and/or water resistance agent or foreign matter adhering to the surface of the film may have precipitated; thus, a cleaning step of cleaning the surface of the film (hereafter, "cleaning step 2") can be performed. The cleaning time is preferably from 1 second to 5 minutes. The cleaning method preferably involves immersion in a cleaning solution, but it is also possible to apply or paint the solution onto the polyvinyl alcohol resin film. The cleaning treatment can be performed in one stage, or in two or more multiple stages. There is no particular limitation upon the temperature of the solution used in the cleaning step; ordinarily, the temperature will be 5-50°C, preferably 10-40°C.

Non-limiting examples of the solvent used in the preceding steps include water; dimethyl sulfoxide; N-methylpyrrolidone; alcohols such as methanol, ethanol, propanol, isopropyl alcohol, glycerol, ethylene glycol, propylene glycol, diethylene glycol, triethylene glycol, tetraethylene glycol, or trimethylol propane; and amines such as ethylenediamine or diethylenetriamine. A mixture of one or more of these solvents can also be used. Water is the most preferable solvent.

After the stretching step or cleaning step 2, a film drying step is performed. Drying can be performed via natural drying, or moisture on the film surface can be removed via roller compression, an air knife, or a water absorbent roller to improve drying efficiency, and/or blow-drying can be performed. The drying temperature is preferably 20-100°C, more preferably 60-100°C. The drying time can be from 30 seconds to 20 minutes, with 5-10 minutes being preferable.

The polyvinyl alcohol resin film polarizing element with improved optical properties and durability according to the present invention can be obtained according to the method described above.

A transparent protective layer is provided on one or both sides of the obtained polarizing element to yield a polarizing plate. The transparent protective layer can be provided in the form of a polymer coating layer or a laminated film layer. The transparent polymer or film forming the transparent protective layer is preferably a transparent polymer or film having high mechanical strength and good thermal stability. Examples of substances used to form the transparent protective layer include cellulose acetate resins such as triacetyl cellulose or diacetyl cellulose, or films thereof; acrylic resins or films thereof; polyvinyl chloride resins or films thereof; nylon resins or films thereof; polyester resins or films thereof; polyarylate resins or films thereof; cyclic polyolefin resins comprising a cyclic olefin such as norbornene as a monomer, or films thereof; polyolefins having a polyethylene, polypropylene, cyclo-, or norbornene frame, or copolymers thereof; and resins having an imide and/or an amide as a main chain or side chain, or polymers or films thereof. A liquid crystalline resin or film thereof can also be provided as the transparent protective layer. The thickness of the protective film is, for example, from 0.5-200 μm. Identical or different types of resin or film are provided in one or more layers on one or both surfaces to create a polarizing plate.

An adhesive is necessary in order to bond the transparent protective layer to the polarizing element. There is no particular limitation upon the adhesive, but a polyvinyl alcohol-based adhesive is preferable. Non-limiting examples of polyvinyl alcohol-based adhesives include Gohsenol™ NH-26 (Nippon Gohsei) and Exceval™ RS-2117 (Kuraray).

A crosslinking agent and/or water resistance agent can be added to the adhesive. A maleic anhydride-isobutylene copolymer is used for the polyvinyl alcohol-based adhesive, but an adhesive into which a crosslinking agent is mixed as necessary can be used. Examples of maleic anhydride-isobutylene copolymers include Isobam #18 (Kuraray), Isobam #04 (Kuraray), ammonia-modified Isobam #104 (Kuraray), ammonia-modified Isobam #110 (Kuraray), imidated Isobam #304 (Kuraray), and imidated Isobam #310 (Kuraray). A water soluble polyhydric epoxy compound can be used as a crosslinking agent at this time. Examples of water soluble polyhydric epoxy compounds include Denacol EX-521 (Nagase ChemteX) and Tetrad-C (Mitsui Gas Chemical). Known adhesives other than a polyvinyl alcohol resin adhesives, such as urethane, acrylic, or epoxy adhesives, can also be used. In order to improve the adhesive strength of the adhesive or to improve water resistance, an additive such as a zinc compound, a chloride, or an iodide can simultaneously be added to a concentration of 0.1-10 wt%. There is no particular limitation upon the additive. After the transparent protective layer is bonded using the adhesive, drying or heat treatment is performed at a suitable temperature to obtain a polarizing plate.

In some cases, such as, for instance, when the obtained polarizing plate is bonded to a liquid crystal or organic electroluminescent display device, various functional layers or brightness-improving layers or films can be provided on the surface of the unexposed side of the protective layer or film in order to improve viewing angle and/or contrast. A glue is preferably used to bond the polarizing plate to these films or display devices.

Various known functional layers, such as a reflection- or glare-preventing layer or a hard coating layer, may be present on the other side of the polarizing plate, i.e., on the exposed side of the protective layer or film. A coating method is preferred for forming these various functional layers, but films having the functions can be bonded to the film using an adhesive or glue. The various functional layers can be a layer or film for controlling phase contrast.

By optimizing the physical properties of the polyvinyl alcohol resin film having a degree of polymerization of 5,000 to 10,000 according to the present invention and designing an optimal pigment structure according to the method described above, a polarizing element and polarizing plate having improved optical properties and light, heat, and humidity resistance can be obtained. An LCD device using the polarizing element or polarizing plate according to the present invention is highly reliable and exhibits high contrast over extended periods, as well as high color reproducibility.

The polarizing element or polarizing plate according to the present invention so obtained can be used with a liquid crystal projector, calculator, clock, laptop computer, word processor, liquid crystal television, polarizing lens, polarized glasses, car navigation system, or interior or exterior instrument or display device, providing a protective layer, functional layer, or backing as necessary

One possible application for the polarizing plate according to the present invention is to use the plate as a polarizing plate with backing. The backing preferably has a flat surface to which the polarizing plate can be bonded, or a molded glass piece for optical applications. Examples of molded glass pieces include a glass plate, a lens, a prism (such as a triangular prism or cubic prism), and the like. A polarizing plate bonded to a lens can be used as a condenser lens with polarizing plate in a liquid crystal projector. A polarizing plate bonded to a prism can be used as a polarizing beam splitter with polarizing plate or dichroic prism with polarizing plate for a liquid crystal projector. The plate may also be bonded to a liquid crystal cell. Examples of glass materials include soda glass, borosilicate glass, an inorganic crystal base, an inorganic sapphire base, or another inorganic glass, or organic plastic sheets of acrylic, polycarbonate, or the like, with inorganic glass being preferable. The thickness and size of the glass plate can be as desired. An AR layer is preferably provided on one or both of a glass side and a polarizing plate side of a polarizing plate with glass in order to further improve single plate light transmission. A transparent adhesive (or glue) is applied to the backing on, for example, a flat backing surface section, to which the polarizing plate according to the present invention is bonded. It is also possible to apply a transparent adhesive (or glue) to the polarizing plate, then bond the backing thereto. The adhesive (or glue) used here is preferably, for example, an acrylic ester adhesive. If the polarizing plate is used as an elliptical polarizing plate, the phase contrast plate side is ordinarily bonded to the backing, but the polarizing plate side may also be bonded to a molded glass piece.

## EXAMPLES

The present invention will be explained in greater detail below with the aid of examples and comparative examples, but the present invention is not limited to these examples. The transmission of the examples was rated as follows.

Respective transmission was measured using a spectrophotometer (Hitachi U-4100).

To measure transmission using a spectrophotometer (Hitachi U-4100), an iodine-based polarizing plate (Polatechno SKN-18043P) having a visibility-corrected transmission of 43% and a polarization level of 99.99% as measured according to JIS-Z 8701 (C light source, 2° field of view) was set on the light-emitting side, and absolutely polarized light was directed upon a measurement specimen. The protective layer of the iodine-based polarizing plate was of non-UV-absorbing triacetyl cellulose.

The absolute parallel transmission rates for various wavelengths obtained by directing absolutely polarized

light upon the polarizing plate according to the present invention and measuring so that the oscillation direction of the absolutely polarized light and the absorption axis direction of the polarizing plate according to the present invention are orthogonal (i.e., the absorption axis of the absolute polarized photons and the absorption axis of the polarizing plate according to the present invention are parallel) were labeled Ky, and absolute orthogonal transmission rates for various wavelengths obtained by measuring so that the oscillation direction of the absolutely polarized light and the absorption axis direction of the polarizing plate according to the present invention are parallel (i.e., the absorption axis of the absolute polarized photons and the absorption axis of the polarizing plate according to the present invention are orthogonal) were labeled Kz.

The Ky and Kz for various wavelengths were used to calculate the single plate transmission Ts for the different wavelengths according to formula (J), and the polarization level p for the different wavelengths according to formula (L).

$$\text{Single plate transmission Ts} = (Ky + Kz) / 2 \qquad \text{Formula (J)}$$

$$\text{Polarization level } \rho = (Ky - Kz) / (Ky + Kz)$$

The azo compounds used in the following examples were synthesized according to the following methods.

Synthesizing Example Compound 1

57.7 parts of sodium 4-nitro-4'-aminostilbene-2,2'-disulfonic acid was diazotized according to a known method, and coupled with a solution of 18.7 parts of 2,5-dimethoxy-aniline in an aqueous solution of hydrochloric acid using sodium acetate as a neutralizing agent. After the coupling reaction, acid precipitation was performed using hydrochloric acid, and the solution was dried to obtain 67.9 parts of a monoazo compound represented by the following formula.

[Formula 27]

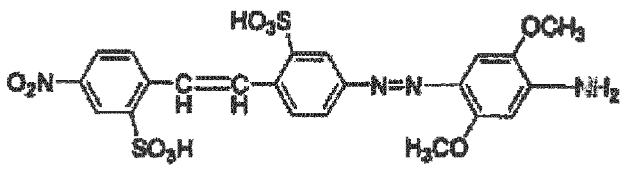

Next, the 67.9 parts of the monoazo compound was dissolved in 1,700 parts of water along with 11.7 parts of sodium hydroxide, and 10.3 parts of sodium nitrite was dissolved in this solution. 160 parts of water and 73 parts of 35% hydrochloric acid were used to separately prepare an aqueous solution of hydrochloric acid, into which the mixed solution of the monoazo compound, sodium hydroxide, and sodium nitrite was dispensed dropwise at 5-10°C to diazotize the mixture. Once diazotization was complete, sulfamic acid was added to remove the nitrite ions. Next, 40.3 parts of phenyl J acid (6-phenylamino-1-naphthol-3-sulfonic acid) was dissolved in 1,000 parts of a 10% aqueous solution of sodium carbonate, and the diazonium salt was added and a coupling reaction was performed at 5-10°C. After stirring overnight, the mixture was evaporated and dried to obtain the water soluble disazo compound represented by Example Compound 1.

Synthesizing Example Compound 10

A compound represented by Example Compound 10 was obtained in a similar manner, except than the phenyl J acid of compound was changed to 6-(4'-amino-3'-sulfophenylamino)-1-naphthol-3-sulfonic acid.

Synthesizing Example Compound 13

75.3 parts of the disazo compound according to Example Compound 1 was dissolved in 1,200 parts of water, and 110 parts of a 20 wt% aqueous solution of copper sulfate pentahydrate, 60 parts of N,N-diethanolamine, and 15 parts of 25% ammonium hydroxide were added, and treatment was performed at 95°C for 8 hours. A small amount of hydrochloric acid was added to adjust the pH of the reacted liquid to 9.0, 12 wt% of sanuki salt with respect to the liquid volume was added, and the liquid was evaporated and dried to obtain the complex copper salt compound represented by Example Compound 13.

Synthesizing Example Compound 16

A complex copper salt compound according to Example Compound 16 was obtained in a manner similar to the synthesis method of Example Compound 13, except that the compound of Example Compound 1 was changed to the compound of Example Compound 10.

Synthesizing Example Compound 17

In a manner similar to the synthesis method of Example Compound 1, except that the phenyl J acid of Example Compound 1 was changed from 6-phenylamino-1-naphthol-3-sulfonic acid to a naphthol represented by the following formula:

[Formula 28]

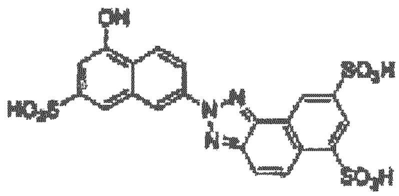

a disazo compound represented by the formula:

[Formula 29]

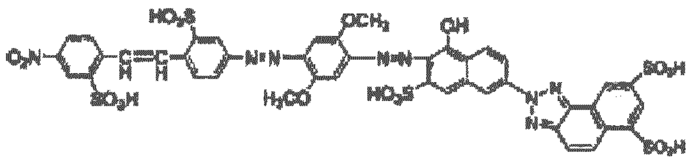

was obtained. Next, a complex copper salt compound was prepared in a manner similar to the synthesis method of Example Compound 13 to obtain the compound represented by Example Compound 17.

Synthesizing Example Compound 18

A disazo compound represented by the following formula:

[Formula 30]

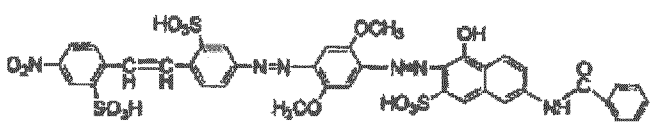

in a manner similar to the synthesis method of Example Compound 1, except that the phenyl J acid of Example Compound 1 (6-phenylamino-1-naphthol-3-sulfonic acid) was changed to 6-(4'-benzoyl) amino-3-sulfonic acid-1-naphthol. Next, a complex copper salt compound was prepared in a manner similar to the synthesis method of Example Compound 13 to obtain the compound represented by Example Compound 18.

Example 1

A polyvinyl alcohol resin film (Kuraray VF series) having a degree of saponification of 99% or greater, a film thickness of 40 μm, a degree of polymerization of 5,500, and a swelling level of 232% was immersed for three minutes in 30°C warm water to perform a swelling treatment. The swelled film was immersed in a 35°C aqueous solution containing 0.3 wt% of the pigment of Example Compound 1, 0.1 wt% sodium tripolyphosphate, and 0.1 wt% mirabilite to adsorb the pigment. The film with adsorbed pigment was cleaned in water, after which a 20°C aqueous solution of 2 wt% boric acid was used to perform boric acid treatment for one minute. The film obtained from the boric acid treatment was treated

for five minutes in a 58°C aqueous solution containing 3.0 wt% boric acid while being stretched to a factor of 5.0. The film obtained from the boric acid treatment was treated for five seconds using room temperature water while being kept in a state of tension. The treated film was immediately dried for five minutes at 60°C to obtain a polarizing element having a single plate transmission of 44% and a thickness of 15 μm. A polarizing element using a polyvinyl alcohol film having a degree of polymerization of 5,500 was manufactured according to the method described above.

The polarizing element was layered with an alkali-treated triacetyle cellulose film (Fuji Photographic Film TD-80U; hereafter, "TAC") having a thickness of 80 μm using a polyvinyl alcohol-based adhesive in a TAC/adhesive layer/polarizing element/adhesive layer/TAC configuration to obtain a laminated polarizing plate for use as a measurement specimen.

A polarizing element was similar manufactured using a polyvinyl alcohol resin film (Kuraray VF-PS) having a thickness of 75 μm and a degree of polymerization of 2,400, and a polarizing element was manufactured using a polyvinyl alcohol film having a degree of polymerization of 2,400 was manufactured in order to compare differences in optical properties arising from the degree of polymerization. A polarizing plate using the polarizing element was also manufactured via lamination using TAC film and used as a comparison measurement specimen.

Example 2

A sample was prepared in a manner similar to Example 1, except that Example Compound 10 was used instead of Example Compound 1 used in Example 1, to create a measurement specimen.

Example 3

A sample was prepared in a manner similar to Example 1, except that Example Compound 13 was used instead of Example Compound 1 used in Example 1, to create a measurement specimen.

Example 4

A sample was prepared in a manner similar to Example 1, except that Example Compound 16 was used instead of Example Compound 1 used in Example 1, to create a measurement specimen.

Example 5

A sample was prepared in a manner similar to Example 1, except that Example Compound 17 was used instead of Example Compound 1 used in Example 1, to create a measurement specimen.

Example 6

A sample was prepared in a manner similar to Example 1, except that Example Compound 18 was used instead of Example Compound 1 used in Example 1, to create a measurement specimen.

[Comparative Example 1]

A sample was prepared in a manner similar to Example 1, except that the pigment represented in formula (B1) was used instead of the Example Compound 1 used in Example 1 to create a measurement specimen.

Formula (B1)

[Formula 31]

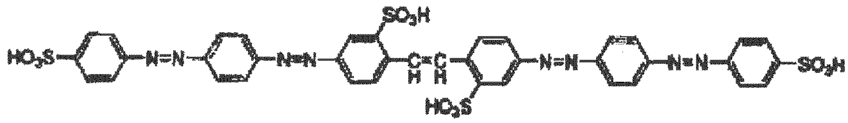

[Comparative Example 2]

A sample was prepared in a manner similar to Example 1, except that the pigment represented in formula (B2) was used instead of the Example Compound 1 used in Example 1 to create a measurement specimen.

Formula (B2)

[Formula 32]

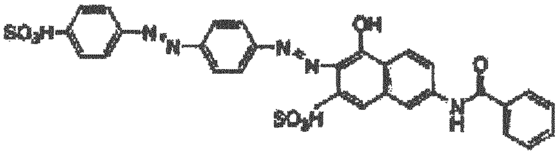

Comparative Example 3

A sample was prepared in a similar manner, except that the pigment represented in formula (B3) was used instead of the Example Compound 1 used in Example 1 to create a measurement specimen.

Formula (B3)

[Formula 33]

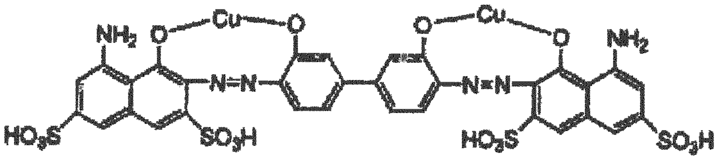

Comparative Example 4

A sample was prepared in a manner similar to Example 1, except that the pigment represented in formula (B4) was used instead of the Example Compound 1 used in Example 1 to create a measurement specimen.

Formula (B4)

[Formula 34]

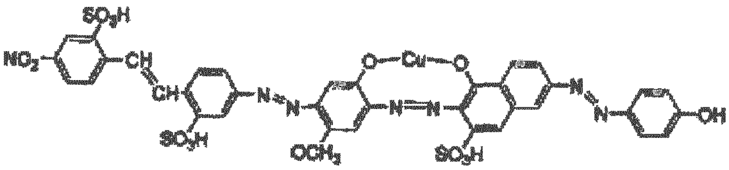

Table 1 shows polarization properties for the samples obtained in examples 1 to 6 and comparative examples 1 to 4. Polarization properties refers to the polarization level p at a Ts of 44% for a wavelength (hereafter, "λmax") representing the maximum polarization properties for each polarizing plate sample. Polarization levels are shown for each of the examples and comparative examples at polyvinyl alcohol resin degree of polymerizations of 5,500 and 2,400.

**[Table 1]**

| | λmax | Polarization (%) at polymerization of 5,500 | Polarization (%) at polymerization of 2,400 | Improvement in polarization properties (%) |
|---|---|---|---|---|
| Example 1 | 608 | 97.08 | 96.54 | 0.54 |
| Example 2 | 580 | 98.34 | 97.82 | 0.52 |
| Example 3 | 666 | 97.89 | 97.10 | 0.79 |
| Example 4 | 670 | 96.91 | 96.21 | 0.70 |
| Example 5 | 653 | 98.81 | 98.11 | 0.70 |
| Example 6 | 661 | 97.22 | 96.56 | 0.66 |
| Comparative Example 1 | 438 | 98.68 | 98.61 | 0.07 |

(continued)

| | $\lambda$max | Polarization (%) at polymerization of 5,500 | Polarization (%) at polymerization of 2,400 | Improvement in polarization properties (%) |
|---|---|---|---|---|
| Comparative Example 2 | 522 | 97.63 | 97.59 | 0.04 |
| Comparative Example 3 | 620 | 91.82 | 91.79 | 0.03 |
| Comparative Example 4 | 666 | 97.65 | 97.81 | -0.16 |

It was confirmed for examples 1-6 and comparative examples 1-4 that the polarizing element and polarizing plate according to the present invention exhibited better properties and improved polarization properties at a degree of polymerization of 5,550 than at a degree of polymerization of 2,400. By contrast, there was little improvement in properties in comparative examples 1-4 at a degree of polymerization of 5,500, and, indeed, properties worsened in comparative example 4.

As can be seen from examples 1-6 and comparative examples 1-4, using the polarizing element according to the present invention allowing a polarizing plate of improved optical properties to be obtained. The resulting polarizing plate allows for a polarizing element and polarizing plate of improved light, heat, and humidity resistance to be obtained, and a LCD device and a polarizing lens using this polarizing element and polarizing plate exhibit good polarization properties and durability.

## Claims

1. A polarizing element **characterized in** comprising a stretched polyvinyl alcohol resin film adsorbing at least one dichromatic pigment selected from a compound represented by formula (I), a salt thereof, or a transition metal complex thereof, wherein the polyvinyl alcohol resin film has a degree of polymerization of 5,000 to 10,000,

Formula (I)

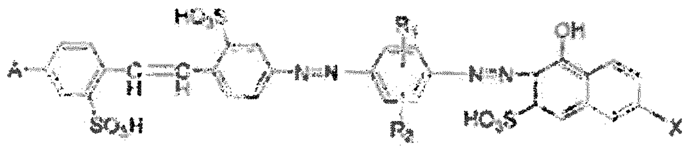

wherein *A* represents a nitro group; $R_1$ and $R_2$ each independently represents a hydrogen atom, a hydroxyl group, a $C_{1-5}$ alkyl group, a $C_{1-5}$ alkoxy group, a sulfo group, or a $C_{1-5}$ alkoxy group having a sulfo group; and *X* represents a benzoylamino group optionally having a substituent, a phenylamino group optionally having a substituent, or a naphthotriazole group optionally having a substituent, the substituent being a $C_{1-5}$ alkyl group, a $C_{1-5}$ alkoxy group, a sulfo group, an amino group, or a substituted amino group.

2. The polarizing element according to claim 1, wherein the dichromatic pigment is selected from a compound represented by formula (II), a salt thereof, or a transition metal complex thereof.

Formula (II)

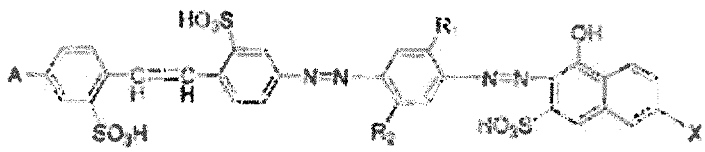

wherein represents a nitro group; $R_1$ and $R_2$ each independently represents a hydrogen atom, a $C_{1-5}$ alkyl group,

a $C_{1-5}$ alkoxy group, a sulfo group, or a alkoxy group having a sulfo group; and *X* represents a benzoylamino group optionally having a substituent, a phenylamino group optionally having a substituent or a naphthotriazole group optionally having a substituent, the substituent being a hydrogen atom, a $C_{1-5}$ alkyl group, a $C_{1-5}$ alkoxy group, a sulfo group, an amino group, or a substituted amino group.

**3.** The polarizing element according to claim 1 or 2, wherein the transition metal complex is a copper complex.

**4.** A polarizing plate, comprising the polarizing element according to any one of claims 1-3 and a transparent protective layer provided on at least one side thereof.

**5.** An LCD device comprising the polarizing element according to any one of claims 1-3 or the polarizing plate according to claim 4.

**6.** A liquid crystal projector comprising the polarizing element according to any one of claims 1-3 or the polarizing plate according to claim 4.

**Patentansprüche**

**1.** Polarisierelement, **dadurch gekennzeichnet, dass** es eine verstreckte Polyvinylalkohol-Harz-Folie umfasst, die zumindest ein dichromatisches Pigment adsorbiert, das aus einer Verbindung, die durch Formel (I) dargestellt wird, einem Salz davon oder einem Übergangsmetallkomplex davon ausgewählt ist, wobei die Polyvinylalkohol-Harz-Folie einen Polymerisationsgrad von 5.000 bis 10.000 aufweist,

Formel (I)

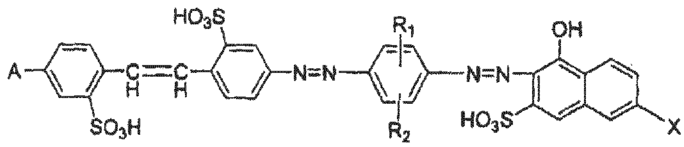

wobei A eine Nitrogruppe darstellt; $R_1$ und $R_2$ jeweils unabhängig voneinander ein Wasserstoffatom, eine Hydroxylgruppe, eine $C_{1-5}$-Alkylgruppe, eine $C_{1-5}$-Alkoxygruppe, eine Sulfogruppe oder eine $C_{1-5}$-Alkoxygruppe, die eine Sulfogruppe aufweist, darstellen; und *X* eine Benzoylaminogruppe, die optional einen Substituenten aufweist, eine Phenylaminogruppe, die optional einen Substituenten aufweist, oder eine Naphthotriazolgruppe, die optional einen Substituenten aufweist, darstellt, wobei der Substituent eine $C_{1-5}$-Alkylgruppe, eine $C_{1-5}$-Alkoxygruppe, eine Sulfogruppe, eine Aminogruppe oder eine substituierte Aminogruppe ist.

**2.** Polarisierelement nach Anspruch 1, wobei das dichromatische Pigment aus einer Verbindung, die durch Formel (II) dargestellt wird, einem Salz davon oder einem Übergangsmetallkomplex davon ausgewählt ist,

Formel (II)

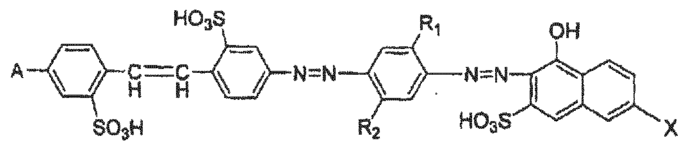

wobei A eine Nitrogruppe darstellt; $R_1$ und $R_2$ jeweils unabhängig voneinander ein Wasserstoffatom, eine $C_{1-5}$-Alkylgruppe, eine $C_{1-5}$-Alkoxygruppe, eine Sulfogruppe oder eine $C_{1-5}$-Alkoxygruppe, die eine Sulfogruppe aufweist, darstellen; und *X* eine Benzoylaminogruppe, die optional einen Substituenten aufweist, eine Phenylaminogruppe, die optional einen Substituenten aufweist, oder eine Naphthotriazolgruppe, die optional einen Substituenten aufweist, darstellt, wobei der Substituent ein Wasserstoffatom, eine $C_{1-5}$-Alkylgruppe, eine $C_{1-5}$-Alkoxygruppe, eine Sulfogruppe, eine Aminogruppe oder eine substituierte Aminogruppe ist.

**3.** Polarisierelement nach Anspruch 1 oder 2, wobei der Übergangsmetallkomplex ein Kupferkomplex ist.

4. Polarisierplatte, umfassend das Polarisierelement nach einem der Ansprüche 1-3 und eine transparente Schutzschicht, die auf zumindest einer Seite davon vorgesehen ist.

5. LCD-Vorrichtung, umfassend das Polarisierelement nach einem der Ansprüche 1-3 oder die Polarisierplatte nach Anspruch 4.

6. Flüssigkristallprojektor, umfassend das Polarisierelement nach einem der Ansprüche 1-3 oder die Polarisierplatte nach Anspruch 4.

**Revendications**

1. Élément de polarisation **caractérisé en ce qu'**il comprend un film de résine d'alcool polyvinylique étiré adsorbant au moins un pigment dichromatique choisi parmi un composé représenté par la formule (I), un sel de celui-ci ou un complexe de métal de transition de celui-ci, dans lequel le film de résine d'alcool polyvinylique a un degré de polymérisation compris entre 5000 et 10000,

Formule (I)

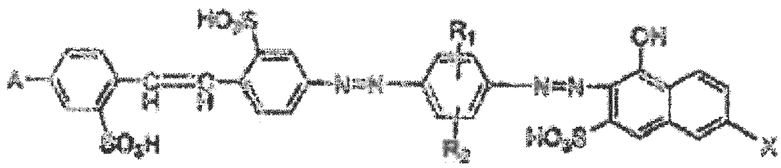

où

A représente un groupe nitro ; $R_1$ et $R_2$ représentent chacun indépendamment un atome d'hydrogène, un groupe hydroxyle, un groupe alkyle en $C_1$ à $C_5$, un groupe alcoxy en $C_1$ à $C_5$, un groupe sulfo ou un groupe alcoxy en $C_1$ à $C_5$ ayant un groupe sulfo ; et X représente un groupe benzoylamino ayant éventuellement un substituant, un groupe phénylamino ayant éventuellement un substituant, ou un groupe naphtotriazole ayant éventuellement un substituant, le substituant étant un groupe alkyle en $C_1$ à $C_5$, un groupe alcoxy en $C_1$ à $C_5$, un groupe sulfo, un groupe amino ou un groupe amino substitué.

2. Élément de polarisation selon la revendication 1, dans lequel le pigment dichromatique est choisi parmi un composé représenté par la formule (II), un sel de celui-ci ou un complexe de métal de transition de celui-ci.

Formule (II)

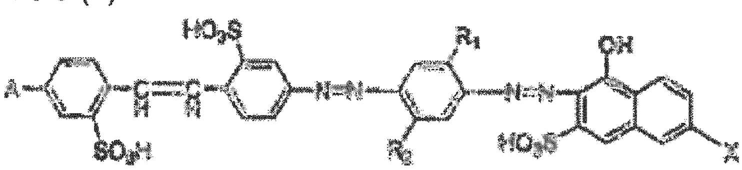

où

A représente un groupe nitro ; $R_1$ et $R_2$ représentent chacun indépendamment un atome d'hydrogène, un groupe alkyle en $C_1$ à $C_5$, un groupe alcoxy en $C_1$ à $C_5$, un groupe sulfo ou un groupe alcoxy en $C_1$ à $C_5$ ayant un groupe sulfo ; et X représente un groupe benzoylamino ayant éventuellement un substituant, un groupe phénylamino ayant éventuellement un substituant, ou un groupe naphtotriazole ayant éventuellement un substituant, le substituant étant un atome d'hydrogène, un groupe alkyle en $C_1$ à $C_5$, un groupe alcoxy en $C_1$ à $C_5$, un groupe sulfo, un groupe amino ou un groupe amino substitué.

3. Élément de polarisation selon la revendication 1 ou 2, dans lequel le complexe de métal de transition est un complexe de cuivre.

4. Plaque de polarisation comprenant l'élément de polarisation selon l'une quelconque des revendications 1 à 3 et

une couche protectrice transparente prévue sur au moins l'un de ses côtés.

**5.** Dispositif LCD comprenant l'élément de polarisation selon l'une quelconque des revendications 1 à 3 ou la plaque de polarisation selon la revendication 4.

**6.** Projecteur à cristaux liquides comprenant l'élément de polarisation selon l'une quelconque des revendications 1 à 3 ou la plaque de polarisation selon la revendication 4.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005171231 A
- JP 2007238888 A
- JP 2008120868 A
- JP 2009014873 A
- JP H01105204 B
- JP H03175404 B